(19) Europäisches Patentamt
European Patent Office
Office européen des brevets

(11) EP 3 109 273 B1

(12) # FASCICULE DE BREVET EUROPEEN

(45) Date de publication et mention de la délivrance du brevet:
**04.01.2023 Bulletin 2023/01**

(21) Numéro de dépôt: **16176258.8**

(22) Date de dépôt: **24.06.2016**

(51) Classification Internationale des Brevets (IPC):
***C08G 69/40*** *(2006.01)* ***C08L 77/00*** *(2006.01)*

(52) Classification Coopérative des Brevets (CPC):
**C08G 69/40; C08L 77/06**

(54) **PEBA POUR ADHERENCE DIRECTE SUR TPE**

PEBA FÜR DIREKTE HAFTUNG AUF TPE

PEBA FOR DIRECT BONDING TO TPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2015 FR 1556000**

(43) Date de publication de la demande:
**28.12.2016 Bulletin 2016/52**

(73) Titulaire: **ARKEMA FRANCE**
**92700 Colombes (FR)**

(72) Inventeurs:
- **EUSTACHE, René-Paul**
  **27170 Combon (FR)**
- **SABARD, Mathieu**
  **27470 Serquigny (FR)**
- **DERAIL, Yves**
  **27930 Aviron (FR)**
- **PINEAU, Quentin Patrick**
  **27000 Evreux (FR)**
- **TURAN-ALTUNTAS, Inci**
  **27100 Val de Rueil (FR)**
- **POUZET, Martin**
  **Mumbai 400050 (IN)**
- **YOSHITAKE, Atsushi**
  **Kyoto 600-8815 (JP)**

(74) Mandataire: **Arkema Patent**
**Arkema France**
**DRD-DPI**
**420, rue d'Estienne d'Orves**
**92705 Colombes Cedex (FR)**

(56) Documents cités:
**WO-A1-95/12481**
**WO-A1-03/050159**
**WO-A1-2004/037898**
**FR-A1- 2 897 355**
**FR-A1- 3 011 550**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 109 273 B1

## Description

DOMAINE DE L'INVENTION

La présente invention concerne un nouveau copolymère à blocs polyamides PA et blocs polyéthers PE (abrégé PEBA), particulièrement bien adapté au procédé d'adhérence directe, sur un substrat à base d'élastomère thermoplastique (abrégé TPE), notamment sur TPU.

La présente invention concerne également l'assemblage par adhérence directe d'un premier substrat à base de PEBA selon l'invention (C1) et d'un second substrat (C2), les substrats pouvant être de même nature ou de nature différente. La présente invention concerne en outre un produit stratifié formé par l'assemblage de tels substrats par adhérence directe.

La présente invention concerne notamment un procédé de fabrication d'un tel stratifié et son utilisation dans l'industrie de la chaussure, notamment pour la fabrication de semelles et tout particulièrement de semelles de chaussures de sport.

ARRIERE-PLAN TECHNIQUE

Un des principaux savoir-faire de l'industrie de la chaussure réside dans une bonne maîtrise des techniques de collage destinées à assembler des matériaux de nature chimique et de propriétés mécaniques différentes. Ce savoir-faire est particulièrement important dans le domaine de la chaussure de sport où les matériaux utilisés, notamment pour la fabrication des semelles, sont fréquemment des matériaux nouveaux. Cette exigence est décuplée par la recherche de la performance généralement liée à la chaussure de sport.

Durant la dernière décennie les matériaux à base de TPE, tels que les matériaux PEBA commercialisés par la société Arkema sous la marque Pebax® se sont progressivement imposés dans le domaine de la chaussure haut de gamme, en particulier de sport, grâce à leurs propriétés mécaniques et notamment leur propriété de retour élastique exceptionnel. En effet, les PEBA peuvent être avantageusement utilisés dans les chaussures de sport en tant que semelle de type "semi-rigide" (foot-ball, base-bail,...) ou souple (jogging) permettant de réaliser directement la semelle interne (amortissement) et/ou la semelle externe (tenue à l'abrasion-rigidité).

L'assemblage de TPE sur des TPE de même nature ou de compositions différentes est obtenu par moulage ou extrusion, éventuelle découpe des composants, puis collage et pressage de ces composants, ou encore par adhérence directe de ces TPE.

Par « procédé d'adhérence directe », on entend un procédé d'adhérence sans apport de liant, notamment sans apport de colle ou adhésif. Comparativement aux procédés classiques de collage impliquant une multitude d'étapes compliquées utilisant généralement des adhésifs à base de solvants organiques, les procédés d'adhérence directe sont plus économiques et non polluants.

A titre d'exemple de procédé d'adhérence directe, on peut citer : le surmoulage, le pressage à chaud, la coextrusion, le thermoformage, l'injection bi-matière, la co-injection, l'injection bi-matière, et toute autre méthodes d'adhérence possible utilisant une ou plusieurs des méthodes classiques telles que le moulage par injection, le moulage par extrusion et/ou le moulage par soufflage.

Cette cohésion entre les matériaux est rendue possible par les propriétés adhésives que possèdent les polymères à l'état fondu. Par exemple, le document de brevet EP197845 décrit un procédé d'assemblage de surfaces par application d'un joint de PEBA et fusion de sa couche superficielle. Le document de brevet EP179700 décrit une composition adhésive comprenant un PEBA et son utilisation en tant qu'adhésif sensible à la pression. Le document de brevet EP0679119 décrit un objet bicouche comprenant un élastomère thermoplastique allégé de type polyétheramide adhérant en lui-même sur un thermoplastique non allégé pouvant être choisi parmi les polyétheramides, polyétheresters, polyuréthanes.

La technique du surmoulage consiste en l'injection de matière sur un insert placé au fond du moule. La cohésion des deux matériaux s'obtient par les propriétés de hot melt et de compatibilité de la matière surmoulée et de l'insert. Les PEBA conviennent très bien à cette technique de surmoulage car ils possèdent une large plage de plastification, permettant d'optimiser l'adhérence de la matière et des inserts et d'éviter l'emploi d'adhésif.

Malheureusement, les niveaux d'adhérence, exprimés par la force de pelage, des substrats à base de TPE, des systèmes de l'art antérieur obtenus par adhérence directe, est loin d'être optimale. Ainsi, avec certains des substrats en PEBA de dureté 60 à 65 Shore D en moyenne (par exemple Pebax® 6333) on obtient au mieux des forces de pelage faibles de 3 kg/cm. Or, les fabricants de chaussures imposent pour certaines applications une force de pelage d'au moins 5, de préférence d'au moins 8, voire d'au moins 10 kg/cm.

La présente invention a donc pour but de fournir un PEBA aux propriétés d'adhérence directe améliorées sur substrats TPE, et en particulier sur TPU.

La présente invention a aussi pour but de fournir un stratifié comprenant au moins un substrat à base de PEBA,

ainsi qu'un procédé de fabrication d'un tel stratifié par adhérence directe, le stratifié devant présenter une force de pelage supérieure à 3 kg/cm, de préférence d'au moins 5 kg/cm, de préférence d'au moins 8 kg/cm, voire d'au moins 10 kg/cm, mesurée selon la norme ISO 11339.

La présente invention a encore pour but d'augmenter le niveau d'adhérence des matériaux TPE sans altérer leurs propriétés mécaniques.

La Demanderesse a maintenant développé un nouveau type de PEBA qui présente une adhérence directe sur TPE nettement supérieure à celle des PEBAs existants, avec une force de pelage supérieure à 10 kg/cm, tout en conservant d'excellentes propriétés mécaniques telles qu'une bonne nervosité, une faible densité, et une faible rigidification à froid.

## RESUME DE L'INVENTION

L'invention concerne en premier lieu un copolymère à blocs polyamide PA et blocs polyéther PE, dans lequel PA est de type X.Y, X le nombre de carbones de la diamine est compris dans la gamme de 4 à 14, de préférence de 6 à 14, de préférence de 6 à 12 ; et Y le nombre de carbones du diacide est compris dans la gamme de 6 à 18, de préférence de 6 à 12, de préférence de 10 à 12.

Avantageusement, X est choisi parmi 6 ou 10, et Y est choisi parmi 10 ou 12 ; de préférence le PA X.Y est le PA 6.10 ou le PA 6.12 ; de préférence le PA 6.10.

Avantageusement, PE est choisi parmi PTMG, PPG, PO3G et/ou PEG ; de préférence choisi parmi PTMG, PPG et/ou PO3G.

De préférence le copolymère selon l'invention est choisi parmi le PEBA PA6.10-PTMG ou PA6.12-PTMG, de préférence le PA6.10-PTMG.

Avantageusement, ledit copolymère comprend de 51 à 90 % en poids, de préférence de 60 à 90 % en poids, de préférence de 65 à 85 % en poids de blocs polyamide ; et respectivement de 49 à 10% en poids, de préférence de 40 à 10 % en poids, de préférence de 35 à 15 % en poids de blocs polyéther, sur le poids total de copolymère. Selon un autre mode de réalisation, ledit copolymère comprend de 55 à 65 % en poids de blocs polyamide et de 45 à 35% en poids de blocs polyéther, par rapport au poids total du copolymère. Avantageusement, la masse moléculaire moyenne en nombre (Mn) des blocs PA est comprise dans la gamme de 500 à 10000, de préférence de 1000 à 10000, de préférence de 2000 à 9000, de préférence de 2000 à 6000, de préférence de 2000 à 3000, de préférence de 2500 à 3000. Selon un autre mode de réalisation, la masse moléculaire moyenne en nombre (Mn) des blocs PA est comprise dans la gamme de 800 à 900. Avantageusement, la masse moléculaire moyenne en nombre (Mn) des blocs PE est comprise dans la gamme de 400 à 1000, de préférence de 500 à 1000, de préférence de 600 à 700, voire de 600 à 650.

La présente invention a également pour objet l'utilisation d'un PEBA dans un procédé d'adhérence directe entre deux matériaux TPE pour augmenter la force de pelage entre ces matériaux, caractérisée en ce que le PEBA est un copolymère selon l'invention décrite ci-dessus.

La présente invention a notamment pour objet une composition à base de copolymère selon l'invention décrite ci-dessus, la composition étant caractérisée en ce qu'elle comprend :

- de 51% à 99,9% en poids dudit copolymère,
- de 0,1 à 49% en poids d'au moins un autre composant choisi parmi : les PEBA de composition différente et/ou de module de flexion différent de celle/celui du copolymère, les PA, les POF, les COPE, les TPU, les charges et/ou fibres de renfort, notamment de verre ou de carbone, les colorants, les absorbeurs UV, les antioxydants, notamment phénoliques, ou à base de phosphore ou à base de soufre, les stabilisants lumière de type amine encombrée ou HALS, et leurs mélanges.

La présente invention a encore pour objet un procédé d'adhérence directe d'un matériau copolymère (C1) selon l'invention avec un matériau copolymère TPE (C2), C2 étant de composition identique et de même module de flexion que C1, ou bien de composition identique mais de module de flexion différent de C1, ou bien C2 est un matériau TPE choisi parmi : les PEBA de composition différente de celle dudit copolymère C1, les COPE, et/ou les TPU ; le procédé selon l'invention étant caractérisé en ce que l'assemblage s'effectue par un procédé comprenant le chauffage d'au moins un des deux matériaux copolymères C1 et/ou C2, de façon à faire adhérer un matériau à l'autre.

Selon un mode de réalisation avantageux du procédé de l'invention, le matériau C1 est fondu ou ramolli sous chauffage, et le matériau C1 fondu est porté en contact avec au moins une partie du matériau C2 de la série des polyuréthanes thermoplastiques TPU pour faire adhérer les deux matériaux. Selon un deuxième mode de réalisation avantageux du procédé de l'invention, le matériau C2 de la série des polyuréthanes thermoplastiques TPU est fondu ou ramolli sous chauffage, et le matériau C2 fondu est porté en contact avec au moins une partie du matériau C1 pour faire adhérer les deux matériaux.

Selon un troisième mode de réalisation avantageux du procédé de l'invention, le matériau C1 et le matériau

C2 de la série des TPU sont indépendamment fondus ou ramollis sous chauffage, et le matériau C1 fondu est porté en contact avec au moins une partie du matériau C2 fondu pour faire adhérer les deux matériaux.

Avantageusement, dans le procédé d'assemblage selon l'invention, le matériau C1 et le matériau C2 sont assemblés par un procédé d'adhérence directe choisi parmi : surmoulage, pressage à chaud, coextrusion, thermoformage, moulage par injection, moulage par extrusion, moulage par soufflage, et leurs mélanges ; de préférence par surmoulage d'un matériau sur l'autre, de préférence par surmoulage du copolymère selon l'invention sur un TPE, de préférence par surmoulage du copolymère sur un TPU. Avantageusement, la température d'assemblage du procédé d'adhérence directe selon l'invention est comprise dans la gamme de 220 à 300°C, de préférence de 250 à 290°C, de préférence de 270 à 290°C.

La présente invention a aussi pour objet un article composite comprenant au moins deux matériaux polymères adhérant directement l'un à l'autre, l'un de composition conforme à l'invention décrite ci-dessus, l'autre en TPE choisi parmi : PEBA identique (de module de flexion différent de celui du copolymère), PEBA de composition différente de celle dudit copolymère, COPE, et/ou TPU.

La présente invention a également pour objet l'utilisation d'un article selon l'invention, pour la fabrication d'un équipement de sport, d'un élément de chaussure, notamment de chaussure de sport, semelle de chaussure, notamment crampon, élément de ski, notamment de chaussure de ski ou de coque de ski, d'un dispositif médical, d'une courroie de transmission, comme additif antistatique, comme film imper-respirant, comme support de molécules actives, comme agent colorant, agent de soudure, comme élément de décoration, et/ou comme additif pour polyamide.

La présente invention permet de surmonter les inconvénients de l'état de la technique. Elle fournit plus particulièrement un PEBA capable d'adhérer directement sur TPU, par chauffage, sans dégrader les matériaux à assembler, tout en apportant une bonne nervosité, une faible densité, et une faible rigidification à froid au matériau stratifié ainsi obtenu.

Ceci est accompli grâce à l'utilisation du PEBA spécifique selon l'invention. Ce résultat est surprenant dans la mesure où les polymères thermoplastiques élastomères polycondensés de haute dureté (60 à 65 Shore D) sont généralement difficiles à assembler par adhérence directe de manière à la fois efficace et durable sur TPU.

## DESCRIPTION DE MODES DE REALISATION DE L'INVENTION

Dans la présente description, on précise que lorsqu'il est fait référence à des intervalles, les expressions du type « allant de...à » ou « comportant/comprenant de... à » incluent les bornes de l'intervalle. A l'inverse, les expressions du type « compris entre...et... » excluent les bornes de l'intervalle.

Sauf mention contraire, les pourcentages exprimés sont des pourcentages massiques. Sauf mention contraire, les paramètres auxquels il est fait référence sont mesurés à pression atmosphérique, et température ambiante (20-25°C, généralement 23°C).

L'invention est maintenant décrite plus en détail et de façon non limitative dans la description qui suit.

Le terme « polymère thermoplastique élastomère », abrégé « TPE », désigne un polymère qui constitue un matériau polyphasique présentant au moins deux transitions, à savoir une première transition à une température T1 (en général il s'agit de la température de transition vitreuse) et une deuxième transition à une température T2 supérieure à T1 (en général il s'agit du point de fusion). A une température inférieure à T1, le matériau est rigide, entre T1 et T2 il a un comportement élastique, et au-dessus de T2 il est fondu. Un tel polymère combine le comportement élastique des matériaux de type caoutchouc avec l'aptitude à la transformation des thermoplastiques.

## Le PEBA selon l'invention utilisé comme matériau ou substrat C1

L'invention a pour objet un copolymère à blocs polyamide PA et blocs polyéther PE (PEBA) particulier, sélectionné pour son aptitude à adhérer directement sur un autre TPE par simple chauffage.

Ce PEBA selon l'invention a pour caractéristique essentielle de comporter des blocs polyamide PA de type X.Y, dans lequel X le nombre de carbones de la diamine est compris dans la gamme de 4 à 14, de préférence de 6 à 14, et Y le nombre de carbones du diacide est compris dans la gamme de 6 à 18.

X est de préférence choisi parmi 6 ou 10, et Y est choisi parmi 10 ou 12 ; de préférence le PA X.Y est le PA 6.10 ou le PA 6.12 ; de préférence le PA 6.10.

Avantageusement, la masse moléculaire moyenne en nombre (Mn) des blocs PA est comprise dans la gamme de 500 à 10000, de préférence de 1000 à 10000, de préférence de 2000 à 9000, de préférence de 2000 à 6000, de préférence de 2000 à 3000, de préférence de 2500 à 3000. Selon un autre mode de réalisation, la masse moléculaire moyenne en nombre (Mn) des blocs PA est comprise dans la gamme de 800 à 900.

Concernant les blocs PE du PEBA selon l'invention, PE est choisi parmi PTMG, PPG, PO3G et/ou PEG ; de préférence choisi parmi PTMG, PPG et/ou PO3G.

Avantageusement, la masse moléculaire moyenne en nombre (Mn) des blocs PE est comprise dans la gamme

de 400 à 1000, de préférence de 500 à 1000, de préférence de 600 à 700, voire de 600 à 650.

Avantageusement, ledit copolymère comprend de 51 à 90 % en poids, de préférence de 60 à 90 % en poids, de préférence de 65 à 85 % en poids de blocs polyamide ; et respectivement de 49 à 10% en poids, de préférence de 40 à 10 % en poids, de préférence de 35 à 15 % en poids de blocs polyéther, sur le poids total de copolymère. Selon un autre mode de réalisation, ledit copolymère comprend de 55 à 65 % en poids de blocs polyamide et de 45 à 35% en poids de blocs polyéther, par rapport au poids total du copolymère.

Autres TPE utilisés comme matériau ou substrat C2

Les autres TPE utilisés dans le cadre de l'invention peuvent être choisis dans le groupe constitué des copolyéther bloc amides, copolyéther ou copolyesters bloc uréthanes et copolyéther bloc esters et des combinaisons de ceux-ci. On rappelle ci-après la définition générale de chacun de ces TPE.

Les copolyéther bloc amides, encore appelés copolymères à blocs polyéther et blocs polyamide, soit en abrégé « PEBA », résultent de la polycondensation de blocs polyamides à extrémités réactives avec des blocs polyéthers à extrémités réactives, telles que, entre autres :

1) blocs polyamides à bouts de chaîne diamines avec des blocs polyoxyalkylènes à bouts de chaînes dicarboxyliques ;
2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols ;
3) blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.

La masse molaire en nombre Mn des blocs polyamides est comprise entre 400 et 20000 g/mol et de préférence entre 500 et 10000 g/mol.

Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbornane (BAMN) et la pipérazine (Pip).

On a par exemple des blocs PA4.12, PA4.14, PA4.18, PA6.10, PA6.12, PA6.14, PA6.18, PA9.12, PA10.10, PA10.12, PA10.14 et PA10.18.

Selon un deuxième type, les blocs polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide alpha omega amino carboxylique, on peut citer les acides aminocaproïque, amino-7-heptanoïque, amino-11- undécanoïque et amino-12-dodécanoïque.

Avantageusement les blocs polyamides du deuxième type sont en polyamide 11, en polyamide 12 ou en polyamide 6.

Selon un troisième type, les blocs polyamides résultent de la condensation d'au moins un acide alpha oméga aminocarboxylique (ou un lactame), au moins une diamine et au moins un diacide carboxylique.

Dans ce cas, on prépare les blocs polyamide PA par polycondensation :

- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y) ;
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques.

Avantageusement, on utilise comme limiteur de chaîne le diacide carboxylique ayant Y atomes de carbone, que l'on introduit en excès par rapport à la stoechiométrie de la ou des diamines.

Selon une variante de ce troisième type les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemple d'acide alpha omega amino carboxylique aliphatique, on peut citer les acides aminocaproïques, amino-7-heptanoïque, amino-11-undécanoïque et amino-12-dodécanoïque. A titre d'exemple de lactame, on peut citer le caprolactame, l'oenantholactame et le lauryllactame. A titre d'exemple de diamines aliphatiques, on peut citer l'hexaméthylènediamine, la dodécaméthylènediamine et la triméthylhexaméthylène diamine. A titre d'exemple de diacides cycloaliphatiques, on peut citer l'acide 1,4-cyclohexyldicarboxylique. A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque Pripol® par la société Unichema, ou sous la marque Empol® par la société Henkel) et les polyoxyalkylènes - $\alpha,\omega$ diacides. A titre d'exemple de diacides aromatiques, on peut citer les acides téréphtalique (T) et isophtalique (I). A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de blocs polyamides du troisième type, on peut citer les suivantes :

- 6.6/6 dans laquelle 6.6 désigne des motifs hexaméthylènediamine condensée avec l'acide adipique. 6 désigne des motifs résultant de la condensation du caprolactame.
- 6.6/6.10/11/12 dans laquelle 6.6 désigne l'hexaméthylènediamine condensée avec l'acide adipique. 6.10 désigne l'hexaméthylènediamine condensée avec l'acide sébacique. 11 désigne des motifs résultant de la condensation de l'acide aminoundécanoïque. 12 désigne des motifs résultant de la condensation du lauryllactame.

La masse Mn des blocs polyéther est comprise entre 100 et 6 000 g/mol et de préférence entre 200 et 3 000 g/mol.

De préférence, le polymère comprend de 1 à 80 % en masse de blocs polyéther et de 20 à 99 % en masse de blocs polyamide, de préférence de 4 à 80 % en masse de blocs polyéther et 20 à 96 % en masse de blocs polyamide.

Les blocs polyéthers sont constitués de motifs oxyde d'alkylène. Ces motifs peuvent être par exemple des motifs oxyde d'éthylène, des motifs oxyde de propylène ou tétrahydrofurane (qui conduit aux enchaînements polytétraméthylène glycol). On utilise ainsi des blocs PEG (polyethylène glycol) c'est à dire ceux constitués de motifs oxyde d'éthylène, des blocs PPG (propylène glycol) c'est à dire ceux constitués de motifs oxyde de propylène, des blocs PO3G (polytriméthylène glycol) c'est-à-dire ceux constitués de motifs polytriméthylène ether de glycol (de tels copolymères avec des blocs polytriméthylene ether sont décrits dans le document US6590065), et des blocs PTMG c'est à dire ceux constitués de motifs tetraméthylène glycols appelés aussi polytétrahydrofurane. Les copolymères PEBA peuvent comprendre dans leur chaîne plusieurs types de polyéthers, les copolyéthers pouvant être à blocs ou statistiques.

On peut également utiliser des blocs obtenus par oxyéthylation de bisphenols, tels que par exemple le bisphenol A. Ces derniers produits sont décrits dans le brevet EP613919.

Les blocs polyéthers peuvent aussi être constitués d'amines primaires éthoxylées. A titre d'exemple d'amines primaires éthoxylées on peut citer les produits de formule :

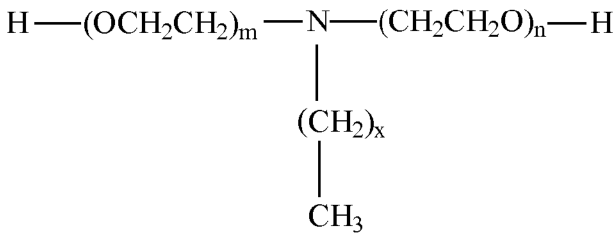

dans laquelle m et n sont compris entre 1 et 20 et x entre 8 et 18. Ces produits sont disponibles dans le commerce sous la marque Noramox® de la société CECA et sous la marque Genamin® de la société Clariant.

Les blocs souples polyéthers peuvent comprendre des blocs polyoxyalkylène à bouts de chaînes $NH_2$, de telles blocs pouvant être obtenues par cyanoacétylation de blocs polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman, également décrites dans les documents de brevets JP2004346274, JP2004352794 et EP1482011).

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. La méthode générale de préparation en deux étapes des copolymères PEBA ayant des liaisons ester entre les blocs PA et les blocs PE est connue et est décrite, par exemple, dans le brevet français FR2846332. La méthode générale de préparation des copolymères PEBA de l'invention ayant des liaisons amide entre les blocs PA et les blocs PE est connue et décrite, par exemple dans le brevet européen EP1482011. Les blocs polyéther peuvent être aussi mélangés avec des précurseurs de polyamide et un limiteur de chaîne diacide pour faire les polymères à blocs polyamides et blocs polyéthers ayant des motifs répartis de façon statistique (procédé en une étape).

Bien entendu, la désignation PEBA dans la présente description de l'invention se rapporte aussi bien aux Pebax® commercialisés par Arkema, aux Vestamid® commercialisés par Evonik®, aux Grilamid® commercialisés par EMS, qu'aux Kellaflex® commercialisés par DSM ou à tout autre PEBA d'autres fournisseurs.

Avantageusement, les copolymères PEBA ont des blocs PA en PA 6, en PA 11, en PA 12, PA 6.12, en PA 6.6/6, en PA 10.10 et/ou en PA 6.14, de préférence des blocs PA 11 et/ou PA 12 ; et des blocs PE en PTMG, en PPG et/ou en PO3G.Les PEBA à base de blocs PE constitués majoritairement de PEG sont à ranger dans la gamme des PEBA hydrophiles. Les PEBA à base de blocs PE constitués majoritairement de PTMG sont à ranger dans la gamme des PEBA hydrophobes.

Avantageusement, ledit PEBA utilisé dans la composition selon l'invention est obtenu au moins partiellement à partir de matières premières bio-ressourcées.

Par matières premières d'origine renouvelable ou matières premières bio-ressourcées, on entend des matériaux qui comprennent du carbone bio-ressourcé ou carbone d'origine renouvelable. En effet, à la différence des matériaux issus de matières fossiles, les matériaux composés de matières premières renouvelables contiennent du $^{14}C$. La « teneur en carbone d'origine renouvelable » ou « teneur en carbone bio-ressourcé » est déterminée en application des normes ASTM D 6866 (ASTM D 6866-06) et ASTM D 7026 (ASTM D 7026-04). A titre d'exemple, les PEBA à base de polyamide 11 proviennent au moins en partie de matières premières bio-ressourcées et présentent une teneur en carbone bio-ressourcé d'au moins 1%, ce qui correspond à un ratio isotopique de $^{12}C/^{14}C$ d'au moins 1,2 x $10^{-14}$. De préférence, les PEBA selon l'invention comprennent au moins 25, de préférence au moins 35 et en particulier au moins 50% en masse de carbone bio-ressourcé sur la masse totale de carbone, ce qui correspond à un ratio isotopique $^{12}C/^{14}C$ d'au moins 0,6.$10^{-12}$. Cette teneur est avantageusement plus élevée, notamment jusqu'à 100%, qui correspond à un ratio isotopique $^{12}C/^{14}C$ de 1,2 x $10^{-12}$, dans le cas par exemple de PEBA à blocs PA 11 et blocs PE comprenant du PO3G, PTMG et/ou PPG issus de matières premières d'origine renouvelable.

Comme TPE pour le matériau C2, on peut également utiliser un copolyéther bloc uréthane (abrégé TPU) comprenant un bloc souple de poly(oxyalkylène) et un bloc polyuréthane. Les blocs polyuréthane peuvent être obtenus par réaction entre un diisocyanate, un diol, et si nécessaire, un agent d'allongement de chaîne. Les blocs souples polyéther peuvent être tels que décrits ci-dessus en relation avec les PEBA.

Le diisocyanate est notamment un diisocyanate aliphatique tel que le diisocyanate d'hexaméthylène (HMDI), ou le 2,2,4-triméthylhexaméthylène diisocyanate; un diisocyanate alicyclique tel que le cyclohexane 1,4-diisocyanate, dicycloalkylmethane-4,4'-diisocyanate ou l'isophorone diisocyanate (IPDI); un diisocyanate tel que le diisocyanate de phénylène, le diisocyanate de tolylène (TDI) ou le diphénylméthane-4,4'-diisocyanate aromatique (MDI); un diisocyanate arylaliphatique tel que le diisocyanate de xylylène; et d'autres. En tant que diisocyanate, on peut également utiliser un composé ayant un groupe alkyle (par exemple, un groupe méthyle) substitué sur une chaîne principale de celui-ci ou d'un cycle. Les diisocyanates ci-dessus peuvent être utilisés seuls ou en combinaison.

Des exemples du diol comprennent un diol de polyester [par exemple, un polyester diol (polyester diol aliphatique) dérivé d'un composant acide dicarboxylique aliphatique (par exemple un acide dicarboxylique aliphatique en C4-12, tel que l'acide adipique), un composant diol aliphatique (par exemple, un diol aliphatique en C2-12, tel que l'éthylène glycol, le propylène glycol, le butanediol, ou le néopentyl glycol), et/ou un composant lactone (par exemple, une lactone en C4-12 telle que l'ε-caprolactone), par exemple un poly(éthylène adipate), un poly(1,4-butylène adipate), et un poly (1,6-hexylène adipate), un poly-ε-caprolactone], un polyéther-diol [par exemple, un polyéther-diol aliphatique, par exemple, un poly(oxyalkylène en C2-4) glycol, tel qu'un polyéthylèneglycol, un poly (oxytriméthylène) glycol, un polypropylène glycol, ou un polytétraméthylène glycol (PTMG), et un copolymère à blocs de poly (oxyalkylène) glycol (par exemple, un copolymère à blocs PEG-PPG); un polyéther diol aromatique, par exemple, un produit d'addition d'un diol aromatique avec un oxyde d'alkylène, tel qu'un bisphénol A - oxyde d'alkylène (par exemple, un produit d'addition d'un oxyde d'alkylène en C2-4 tel que l'oxyde d'éthylène l'oxyde de propylène); un polyester ether diol (un polyester diol obtenu en utilisant le polyéther-diol en tant que partie d'un composant de diol); un polycarbonate diol. Ce(s) diol(s) peu(ven)t être utilisé(s) seul ou en combinaison. Parmi ces diols, le polyester diol ou le polyéther diol tel que le polytétraméthylène glycol est utilisé dans de nombreux cas.

Comme agent d'allongement de chaîne, on peut utiliser un glycol [par exemple, un glycol à chaîne courte, par exemple alcanediol en C2-10, tel que l'éthylène glycol, le propylène glycol, le 1,4-butanediol ou le 1,6-hexanediol; un bishydroxyethoxybenzene (BHEB)], et en outre une diamine [par exemple, une diamine aliphatique, telle qu'une alkylènediamine en C2-10, par exemple, l'éthylènediamine, la triméthylènediamine, la tétraméthylènediamine, ou l'hexaméthylènediamine; une diamine alicyclique tel que l'isophorone diamine; une diamine aromatique telle que la phénylène ou xylylène diamine. L'agent d'allongement de chaîne (s) peut être utilisé seul ou en combinaison de plusieurs types d'allongeurs de chaine.

Le polyuréthane thermoplastique (TPU) préféré est obtenu en utilisant un diol et un diisocyanate en quantité sensiblement équivalente. De manière alternative, le polyisocyanate comporte une petite quantité d'isocyanate libre (ou qui n'a pas réagi) résiduel, obtenu en utilisant une quantité légèrement en excès de diisocyanate par rapport au diol.

De préférence on utilise un TPU obtenu en utilisant un diol [par exemple, un polyester diol ou polyéther-diol], un diisocyanate, et un glycol (par exemple, un glycol à chaîne courte) comme agent d'allongement de chaîne. Le TPU comprend un segment dur (bloc dur) qui est composé d'un polyuréthane formé à partir d'un glycol et d'un diisocyanate, et un segment mou (bloc mou) composé d'un polyéther-diol [par exemple, un polyéther-diol aliphatique (par exemple, un poly (oxyéthylène) glycol)], un polyester diol (par exemple, un polyester diol aliphatique) ou autres. A titre d'exemples de TPU, on peut notamment citer les élastomères suivants : polyester uréthane, polyester éther uréthane, polyéther uréthane, polycarbonate uréthane, et d'autres en fonction de l'espèce du segment mou. Parmi les TPU, les élastomères de polyester uréthane, de polyester éther uréthane, de polyéther uréthane, et leurs mélanges, sont préférés. Par ailleurs, la masse moléculaire moyenne en nombre du polyéther (polyoxyalkylène glycol) est de préférence comprise dans la gamme de 100 à 10000, de préférence de 300 à 6000, et plus préférablement de 500 à 4000.

Le matériau C2 peut comporter un seul TPU ou plusieurs de ces TPU en mélange.

Comme TPE pour le matériau C2, On peut également utiliser un copolyéther bloc ester (abrégé CoPE) comprenant un bloc souple de poly(oxyalkylène) et un bloc polyester. Le bloc polyester peut être obtenu par polycondensation par estérification d'un acide carboxylique, tel que l'acide isophtalique ou l'acide téréphtalique ou un acide carboxylique bio-sourcé (tel que l'acide furane dicarboxylique), avec un glycol, tel que l'éthylène glycol, le triméthylène glycol, le propylène glycol ou le tétraméthylène glycol. Les blocs souples polyéther peuvent être tels que décrits ci-dessus dans la description des PEBA.

La présente invention a également pour objet l'utilisation d'un PEBA dans un procédé d'adhérence directe entre deux matériaux TPE pour augmenter la force de pelage entre ces matériaux, caractérisée en ce que le PEBA est un copolymère selon l'invention décrite ci-dessus.

La présente invention a notamment pour objet une composition à base de copolymère selon l'invention décrite ci-dessus, la composition étant caractérisée en ce qu'elle comprend :

- de 51% à 99,9% en poids dudit copolymère,
- de 0,1 à 49% en poids d'au moins un autre composant choisi parmi : les PEBA de composition différente et/ou de module de flexion différent de celle/celui du copolymère, les PA, les POF, les COPE, les TPU, les charges et/ou fibres de renfort, notamment de verre ou de carbone, les colorants, les absorbeurs UV, les antioxydants, notamment phénoliques, ou à base de phosphore ou à base de soufre, les stabilisants lumière de type amine encombrée ou HALS, et leurs mélanges.

La présente invention a encore pour objet un procédé d'adhérence directe d'un matériau copolymère (C1) selon l'invention avec un matériau copolymère TPE (C2), C2 étant de composition identique et de même module de flexion que C1, ou de composition identique mais de module de flexion différent de C1, ou C2 est un matériau TPE choisi parmi : les PEBA de composition différente de celle dudit copolymère C1, les COPE, et/ou les TPU ; le procédé selon l'invention étant caractérisé en ce que l'assemblage s'effectue par un procédé comprenant le chauffage d'au

moins un des deux matériaux copolymères C1 et/ou C2, de façon à faire adhérer un matériau à l'autre.

Selon un mode de réalisation avantageux du procédé de l'invention, le matériau C1 est fondu ou ramolli sous chauffage, et le matériau C1 fondu est porté en contact avec au moins une partie du matériau C2 de la série des polyuréthanes thermoplastiques TPU pour faire adhérer les deux matériaux.

Selon un deuxième mode de réalisation avantageux du procédé de l'invention, le matériau C2 de la série des polyuréthanes thermoplastiques TPU est fondu ou ramolli sous chauffage, et le matériau C2 fondu est porté en contact avec au moins une partie du matériau C1 pour faire adhérer les deux matériaux.

Selon un troisième mode de réalisation avantageux du procédé de l'invention, le matériau C1 et le matériau C2 de la série des TPU sont indépendamment fondus ou ramollis sous chauffage, et le matériau C1 fondu est porté en contact avec au moins une partie du matériau C2 fondu pour faire adhérer les deux matériaux.

Avantageusement, dans le procédé d'assemblage selon l'invention, le matériau C1 et le matériau C2 sont assemblés par un procédé d'adhérence directe choisi parmi : surmoulage, pressage à chaud, coextrusion, thermoformage, moulage par injection, moulage par extrusion, moulage par soufflage, et leurs mélanges ; de préférence par surmoulage d'un matériau sur l'autre, de préférence par surmoulage du copolymère selon l'invention sur un TPE, de préférence par surmoulage du copolymère sur un TPU. Avantageusement, la température d'assemblage du procédé d'adhérence directe selon l'invention est comprise dans la gamme de 220 à 300°C, de préférence de 250 à 290°C, de préférence de 270 à 290°C.

Un tel procédé peut par exemple être réalisé en joignant les matériaux C1 et C2 dans un procédé de moulage, par injection, notamment injection bi-matière, injection bi-couleurs, multi-couleurs, bi-injection, co-injection. Il est également possible de surmouler une matière souple sur une matière rigide, de température de fusion Tf et/ou de température de transition vitreuse Tg supérieures à celles de la matière souple. Le PEBA selon l'invention peut en outre être surmoulé sur un insert métallique. D'autres procédés classiques peuvent être utilisés : thermoformage, moulage à chaud sous presse, moulage par insert, moulage par injection en sandwich, moulage par extrusion, notamment par co-extrusion, moulage par injection-soufflage, et autres procédés de mise en œuvre des matériaux TPE. L'homme du métier choisit le type de presse à injecter selon le type de moule, d'insert et de matériaux à injecter.

Selon un mode de réalisation particulier du moulage à chaud sous presse, 2 matériaux C1 et C2 sous forme de granules, poudre ou toute autre forme sont chargés dans un moule métallique. Selon un autre mode de réalisation, 2 matériaux C1 et C2, sous la forme d'articles préalablement moulés, sont chargés dans un moule métallique. Selon encore un

Selon encore un mode de réalisation du moulage par injection d'insert, un article composite moulé peut être produit par : moulage de l'un quelconque des matériaux C1 ou C2 à l'aide d'un procédé tel que, moulage par injection, moulage par extrusion, notamment de feuille, ou de film ; puis l'insertion ou la mise en forme dans un moule métallique de l'article ainsi moulé ; puis l'injection de l'autre des matériau C1 ou C2 non encore moulé dans un espace ou une cavité entre l'article moulé et le moule métallique. Dans le moulage par injection d'insert, l'article moulé devant être inséré dans le moule métallique est de préférence préchauffé.

La présente invention a aussi pour objet un article composite comprenant au moins deux matériaux polymères adhérant directement l'un à l'autre, l'un de composition conforme à l'invention décrite ci-dessus, l'autre en TPE choisi parmi : PEBA identique (de module de flexion différent de celui du copolymère), PEBA de composition différente de celle dudit copolymère, COPE, et/ou TPU.

La présente invention a également pour objet l'utilisation d'un article selon l'invention, pour la fabrication d'un équipement de sport, d'un élément de chaussure, notamment de chaussure de sport, semelle de chaussure, notamment crampon, élément de ski, notamment de chaussure de ski de montagne, de free-ride ou de télémark, de ski de fond, de raquettes de neige ou de coque de ski, d'un dispositif médical, d'une courroie de transmission, comme additif antistatique, comme film imper-respirant, comme support de molécules actives, comme agent colorant, agent de soudure, comme élément de décoration, et/ou comme additif pour polyamide.

L'article peut notamment être au moins une partie de pièce choisie parmi les pièces automobiles, textiles, les tissés ou non tissés, l'habillement, les chaussures, les articles de sport, les articles de loisirs, les objets électroniques, le matériel informatique, les équipements de santé, les lunettes, les additifs industriels, l'emballage et les produits ménagers. On peut en particulier citer les tableaux de bord, les airbags, les semelles de chaussure de sport, les balles de golf, les tubes à usage médical, les cathéters, les ballons d'angioplastie, les courroies péristaltiques, les bandes de courroies transporteuses, les produits imper-respirants, les peaux et/ou cuirs synthétiques, les films thermoplastiques ou d'emballage.

## EXEMPLES

Les exemples suivants illustrent l'invention sans la limiter. Les normes utilisées dans les exemples correspondent également à celles utilisées plus généralement pour caractériser l'invention dans la description ou les revendications.

Matériaux utilisés :

Dans les exemples qui suivent :

PEBA 1 : PA 12-PTMG (Mn : 4000-1000)

PEBA 1 est un copolymère à blocs PA12 et blocs PTMG de masses moléculaires moyennes en nombre (Mn) respectives 4000 - 1000.

PEBA 2 : PA 6.10-PTMG (2500-650)

PEBA 2 est un copolymère selon l'invention, à blocs PA6.10 et blocs PTMG de masses moléculaires moyennes en nombre (Mn) respectives 2500 - 650.

PEBA 3 : PA11-PTMG (1000-1000)

PEBA 3 est un copolymère à blocs PA11 et blocs PTMG de masses moléculaires moyennes en nombre (Mn) respectives 1000 - 1000.

PEBA 4 : PA 6.10-PTMG (850-650)

PEBA 4 est un copolymère selon l'invention, à blocs PA6.10 et blocs PTMG de masses moléculaires moyennes en nombre (Mn) respectives 850 - 650.

TPU 1 : est un TPU aromatique, à blocs Ether (PTMG), 95 shore A, de marque Elastollan® 1195A (BASF), et de module de flexion 53 MPa.

TPU 64 shore D : est un TPU aromatique, à blocs Ether (PTMG), 95 shore A, de marque Elastollan® 1164D.

TPU 2 : est un TPU à base de polyester avec une dureté Shore A de 91, de marque Elastollan® 1195A (BASF).

Exemple 1 - Comparaison des forces de pelage (kg/cm) après surmoulage de différents PEBAS sur insert TPU ou PEBA

On a effectué sur les produits surmoulés à différentes températures d'injection, un essai de pelage selon la norme ISO11339.
Les résultats de ces essais sont donnés dans le tableau 1.
On compare dans le tableau 1 suivant l'adhérence de différentes compositions de PEBAs sur insert TPU ou sur insert PEBA, après adhérence directe par surmoulage à différentes températures d'injection.

*Tableau 1*

| Insert | Grade | Forces de pelage (kg/cm) pour différentes températures d'injection (°C) | | | |
|---|---|---|---|---|---|
| | | **250** | **260** | **270** | **280** |
| TPU 1 | PEBA 1 | **7** | | **3** | |
| | PEBA 2 | **14** | **14** | **18** | |
| | PEBA 1 + PEBA 2 (50/50) | | | **8** | |
| | PEBA 2 + PEBA 3 (30/70) | **12** | | | **14** |
| TPU 2 | PEBA 1 | | **10** | | |
| | PEBA 4 | | **15.5** | | |
| PEBA 2 | PEBA 2 | | | **9,3** | |

(suite)

| Insert | Grade | Forces de pelage (kg/cm) pour différentes températures d'injection (°C) | | | |
|---|---|---|---|---|---|
| | | **250** | **260** | **270** | **280** |
| PEBA 2 + PEBA 3 (30/70) | PEBA 2 + PEBA 3 (30/70) | **13** | | | **12** |

On constate que le PEBA 2 (PA 6.10-PTMG) et le PEBA 4 (PA 6.10-PCTMG) selon l'invention présentent une excellente adhérence sur TPU, caractérisée par une force de pelage de 14 kg/cm obtenue pour une température de surmoulage de 250 °C et 15.5 kg/cm obtenue pour une température de surmoulage de 260 °C, respectivement.

De plus, une composition selon l'invention comportant 50% en poids de PEBA 1 et 50% en poids de PEBA 2 présente une adhérence directe nettement améliorée sur TPU (8 kg/cm) par rapport au comparatif PEBA 1 seul (3 kg/cm), après surmoulage sur insert TPU à 270 °C. Le sourmoulage de PEBA 2 sur lui-même à 270 °C conduit également à une adhérence conforme à celle de l'invention, avec une force de pelage supérieure à 9 kg/cm.

De même, le mélange par dry-blend de PEBA 2 (30% en poids) + PEBA 3 (70% en poids) présente une adhérence directe d'au moins 12 kg/cm sur TPU ou sur le produit moulé lui-même (obtenu à partir du même mélange par dry blend ou mélange à sec.

Exemple 2 - Comparaison des propriétés mécaniques

Module de flexion (MPa) selon la norme ISO 178 :

TPU 64 shore D : 270 MPa
PEBA 1 : 285 MPa
PEBA 2 : 320 MPa

Rigidification à froid : mesurée par l'évolution du module E' (MPa) en fonction de la température T ou par l'évolution du rapport E'(T) / E'(23°C) en fonction de la température sur le domaine -40°C, +23°C (Graphe de la figure 1) :

Plus la valeur de ce rapport est faible, moins la rigidité du produit évolue.

Comme le montrent les Graphes 1 et 2, le PEBA 2 selon l'invention, comme le PEBA 1, présentent une plus faible rigidification à froid entre -40 et 23°C, que le TPU 64 shore D.

Tanδ : Facteur d'amortissement/Test de nervosité à température ambiante (23°C) :

Le test de nervosité consiste à solliciter l'extrémité d'une éprouvette et à observer la fréquence des oscillations et le temps nécessaire à l'amortissement de ces oscillations. Le mouvement de l'extrémité du matériau se traduit par une sinusoïde (du type $y = y_0 e^{-\alpha t} \cos(\overline{\omega} t)$) dont l'amplitude décroit au cours du temps.

Plus la fréquence est élevée et plus l'amortissement est faible, plus le matériau est jugé nerveux.

L'indice de nervosité N est défini par $$N = \frac{f}{\tan(\delta)}$$

Avec f, fréquence d'oscillation

Tan δ, facteur d'amortissement calculé à partir des paramètres α et ω = 2π/T.

$$Tan\,\delta = \frac{2\alpha\varpi}{\varpi^2 + \alpha^2}$$

Les essais ont été réalisés à 23°C, deux niveaux de déformation ont été appliqués : 1 et 3%, et le tableau 2 suivant indique les résultats de nervosité :

***Tableau 2***

| Déf. à 1% (23°C) | PEBA 2 | PEBA 1 |
|---|---|---|
| Fréquence (Hz) | 43 ± 1 | 51 ± 1 |
| Tan delta | 0,117 | 0,118 |

| Déf. à 3% (23°C) | PEBA 2 | PEBA 1 |
|---|---|---|
| Fréquence (Hz) | 124 ± 4 | 141 ± 1 |
| Tan delta | 0.147 | 0.136 |

La fréquence d'oscillation de PEBA 1 est un peu plus élevée que celle du PEBA 2. Les valeurs de Tan $\delta$ sont sensiblement les mêmes pour PEBA 1 et PEBA 2. De même, les indices de nervosité des PEBA 1 et PEBA 2 sont relativement proches.

Ces résultats montrent que le PEBA 2 selon l'invention présente un comportement dynamique avec effet ressort, donc une bonne « nervosité ».

Essais de choc Charpy avec entaille (V)

On mesure la résilience $R_{ch}$ (kJ/m$^2$) à 23°C selon la norme ISO 179 1eA, des 3 TPE, le tableau 3 suivant montre les résultats obtenus :

***Tableau 3***

| | TPU 64 shore D | PEBA 2 selon l'invention | PEBA 1 |
|---|---|---|---|
| Rch (kJ/m$^2$) V notch, 23°C | Non casse | Non casse | Non casse |

A 23°C, le PEBA 1, PEBA 2, et le TPU 64 shore D ont un comportement similaire, dans les 3 cas le produit ne casse pas.

Comportement en fatigue - essais de Ross Flex (norme ASTM D1052)

L'essai de Ross flex est un essai de fatigue utilisé pour évaluer la longévité des matériaux lorsque ces derniers sont sollicités en flexion de manière répétée (fréquence de 1.7 cycles/s). Le test permet de dire si le produit casse ou non au bout de n cycles (généralement n = 150.000).

Typiquement, la déformation appliquée est de l'ordre de 5% pour une éprouvette de 2 mm et sollicitée d'un angle de 60°. Cette déformation dépend de l'épaisseur du matériau et de l'angle de sollicitation.

A rayon de courbure constant, plus l'épaisseur e augmente, plus la déformation augmente. A épaisseur constante, plus le rayon de courbure R diminue, plus la déformation augmente.

La déformation appliquée à l'éprouvette est donnée par :

$$\varepsilon = \frac{e}{2(R - e/2)}$$

Angle de sollicitation : 60°
Largeur éprouvette : 20 mm
Température : -10°C
Nombre de cycles : 150.000
Fréquence : 100 cycles/min.

Le PEBA 1 et le PEBA 2 présentent une bonne résistance à la fatigue puisqu'ils passent les 150000 cycles.

De plus le PEBA 2 passe les 150000 cycles après avoir subi un traitement thermique dans les conditions suivantes : 7 jours, à une température de 70°C, et sous 95% d'humidité.

Comparaison de la densité de différents TPE

La densité est mesurée selon la norme ISO 1183 :

TPU 64 shore D : 1,24
PEBA 1 : 1,01
PEBA 2 : 1,06

## Revendications

1. Utilisation d'un copolymère à blocs polyamides PA et blocs polyéthers PE (PEBA) dans un procédé d'adhérence directe entre deux matériaux élastomères thermoplastiques (TPE) pour augmenter la force de pelage entre ces matériaux, **caractérisée en ce que** le PEBA est un copolymère à blocs polyamides PA et blocs polyéthers PE, dans lequel PA est de type X.Y, X le nombre de carbones de la diamine est compris dans la gamme de 6 à 14, et Y le nombre de carbones du diacide est compris dans la gamme de 6 à 18.

2. Utilisation selon la revendication 1, dans lequel X est choisi parmi 6 ou 10, et Y est choisi parmi 10 ou 12 ; de préférence le PA X.Y est le PA 6.10 ou le PA 6.12 ; de préférence le PA 6.10.

3. Utilisation selon l'une quelconque des revendications 1 ou 2, dans laquelle PE est choisi parmi PTMG, PPG, PO3G et/ou PEG ; de préférence choisi parmi PTMG, PPG et/ou PO3G.

4. Utilisation selon l'une quelconque des revendications 1 à 3, dans laquelle ledit copolymère comprend de 51 à 90 % en poids, de préférence de 60 à 90 % en poids, de préférence de 65 à 85 % en poids de blocs polyamide ; et respectivement de 49 à 10% en poids, de préférence de 40 à 10 % en poids, de préférence de 35 à 15 % en poids de blocs polyéther, sur le poids total de copolymère.

5. Utilisation selon l'une quelconque des revendications 1 à 4, dans laquelle la masse moléculaire moyenne en nombre (Mn) des blocs PA est comprise dans la gamme de 500 à 10000, de préférence de 1000 à 10000, de préférence de 2000 à 9000, de préférence de 2000 à 6000, de préférence de 2000 à 3000, de préférence de 2500 à 3000.

6. Utilisation selon l'une quelconque des revendications 1 à 5, dans laquelle la masse moléculaire moyenne en nombre (Mn) des blocs PE est comprise dans la gamme de 400 à 1000, de préférence de 500 à 1000, de préférence de 600 à 700, (de préférence de 600 à 650.

7. Procédé d'adhérence directe d'un matériau copolymère a blocs polyamide PA et blocs polyéther PE (PEBA) C1 te que défini selon l'une quelconque des revendications 1 à 6, avec un matériau copolymère C2, C2 étant de composition identique et de même module de flexion que C1, ou de composition identique mais de module de flexion différent de C1, ou un matériau élastomère thermoplastique (TPE) choisi parmi les PEBA de composition différente de celle dudit copolymère C1, les copolyéther bloc ester (COPE) et/ou les copolyéther bloc uréthane (TPU); **caractérisé en ce que** l'assemblage s'effectue par un procédé comprenant le chauffage d'au moins un des deux matériaux copolymères C1 et/ou C2, de façon à faire adhérer un matériau à l'autre.

8. Procédé selon la revendication 7, dans lequel le matériau C1 est fondu ou ramolli sous chauffage, et le matériau C1 fondu est porté en contact avec au moins une partie du matériau C2 de la série des polyuréthanes thermoplastiques TPU pour faire adhérer les deux matériaux.

9. Procédé selon la revendication 7, dans lequel le matériau C2 de la série des polyuréthanes thermoplastiques TPU est fondu ou ramolli sous chauffage, et le matériau C2 fondu est porté en contact avec au moins une partie du matériau C1 pour faire adhérer les deux matériaux.

10. Procédé selon la revendication 7, dans lequel le matériau C1 et le matériau C2 de la série des TPU sont indépendamment fondus ou ramollis sous chauffage, et le matériau C1 fondu est porté en contact avec au moins une partie du matériau C2 fondu pour faire adhérer les deux matériaux.

11. Procédé selon la revendication 7, dans lequel le matériau C1 et le matériau C2 sont assemblés par un procédé d'adhérence directe choisi parmi : surmoulage, pressage à chaud, coextrusion, thermoformage, moulage par injection, moulage par extrusion, moulage par soufflage, et leurs mélanges ; de préférence par surmoulage d'un matériau sur l'autre, de préférence par surmoulage du copolymère selon l'invention sur un TPE, de préférence par surmoulage du copolymère sur un TPU.

**12.** Procédé selon l'une quelconque des revendication 7 à 11, dans lequel la température d'assemblage est comprise dans la gamme de 220 à 300°C, de préférence de 250 à 290°C, de préférence de 270 à 290°C.

**13.** Article composite comprenant au moins deux matériaux polymères adhérant directement l'un à l'autre, l'un en copolymère tel que défini selon l'une quelconque des revendications 1 à 6, l'autre en élastomères thermoplastiques (TPE) choisi parmi : copolymère à blocs polyamides PA et blocs polyéthers PE (PEBA) identique de module de flexion différent de celui du copolymère, PEBA de composition différente de celle dudit copolymère, copolyéther bloc ester (COPE), et/ou copolyéther bloc uréthane (TPU).

**14.** Utilisation d'un article selon la revendication 13, pour la fabrication d'un équipement de sport, d'un élément de chaussure, notamment de chaussure de sport, semelle de chaussure, notamment crampon, élément de ski, notamment de chaussure de ski ou de coque de ski, d'un dispositif médical, dans une courroie de transmission, comme additif antistatique, comme film imper-respirant, comme support de molécules actives, comme agent colorant, comme agent de soudure, comme élément de décoration, et/ou comme additif pour polyamide.

**Patentansprüche**

**1.** Verwendung eines Copolymers mit Polyamid-(PA-)Blöcken und Polyether- (PE-)Blöcken (PEBA) in einem Verfahren zur direkten Haftung zwischen zwei thermoplastischen elastomeren Materialien (TPE) zur Erhöhung der Abschälkraft zwischen diesen Materialien, **dadurch gekennzeichnet, dass** es sich beim PEBA um ein Copolymers mit Polyamid-(PA-)Blöcken und Polyether-(PE-)Blöcken handelt, wobei das PA vom Typ X.Y ist, X, die Zahl von Kohlenstoffen des Diamins, im Bereich von 6 bis 14 liegt und Y, die Zahl der Kohlenstoffe der zweibasigen Säure, im Bereich von 6 bis 18 liegt.

**2.** Verwendung nach Anspruch 1, wobei X aus 6 oder 10 ausgewählt ist und Y aus 10 oder 12 ausgewählt ist; wobei das PA X.Y vorzugsweise PA 6.10 oder PA 6.12, vorzugsweise PA 6.10, ist.

**3.** Verwendung nach einem der Ansprüche 1 oder 2, wobei PE aus PTMG, PPG, PO3G und/oder PEG ausgewählt, vorzugsweise aus PTMG, PPG und/oder PO3G ausgewählt ist.

**4.** Verwendung nach einem der Ansprüche 1 bis 3, wobei das Copolymer 51 bis 90 Gew.-%, vorzugsweise 60 bis 90 Gew.-%, vorzugsweise 65 bis 85 Gew.-% Polyamidblöcke beziehungsweise 49 bis 10 Gew.-%, vorzugsweise 40 bis 10 Gew.-%, vorzugsweise 35 bis 15 Gew.-% Polyetherblöcke, bezogen auf das Gesamtgewicht des Copolymers, umfasst.

**5.** Verwendung nach einem der Ansprüche 1 bis 4, wobei das Zahlenmittel (Mn) der Molmasse der PA-Blöcke im Bereich von 500 bis 10.000, vorzugsweise 1000 bis 10.000, vorzugsweise 2000 bis 9000, vorzugsweise 2000 bis 6000, vorzugsweise 2000 bis 3000, vorzugsweise 2500 bis 3000, liegt.

**6.** Verwendung nach einem der Ansprüche 1 bis 5, wobei das Zahlenmittel (Mn) der Molmasse der PE-Blöcke im Bereich von 400 bis 1000, vorzugsweise 500 bis 1000, vorzugsweise 600 bis 700, vorzugsweise 600 bis 650, liegt.

**7.** Verfahren zur direkten Haftung eines Copolymermaterials mit Polyamid- (PA-)Blöcken und Polyether- (PE-)Blöcken (PEBA) C1 nach einem der Ansprüche 1 bis 6 an einem Copolymermaterial C2, wobei C2 eine identische Zusammensetzung und denselben Biegemodul wie C1 oder eine identische Zusammensetzung, aber einen von C1 verschiedenen Biegemodul aufweist, oder einem thermoplastischen elastomeren Material (TPE), das aus PEBA mit einer Zusammensetzung, die von derjenigen des Copolymers C1 verschieden ist, Copolyether-Block-Estern (COPE) und/oder Copolyether-Block-Urethanen (TPU) ausgewählt ist; **dadurch gekennzeichnet, dass** das Verbinden durch ein Verfahren erfolgt, welches das Erwärmen zumindest eines der beiden Copolymermaterialien C1 und/oder C2 umfasst, sodass ein Material am anderen verklebt wird.

**8.** Verfahren nach Anspruch 7, wobei das Material C1 unter Erwärmen geschmolzen oder erweicht wird und das geschmolzene Material C1 in Kontakt mit zumindest einem Teil des Materials C2 der Reihe der thermoplastischen Polyurethane, TPU, gebracht wird, um die beiden Materialien zu verkleben.

**9.** Verfahren nach Anspruch 7, wobei das Material C2 der Reihe der thermoplastischen Polyurethane, TPU, unter Erwärmen geschmolzen oder erweicht wird und das geschmolzene Material C2 in Kontakt mit zumindest einem

Teil des Materials C1 gebracht wird, um die beiden Materialien zu verkleben.

10. Verfahren nach Anspruch 7, wobei das Material C1 und das Material C2 der TPU-Reihe unabhängig unter Erwärmen geschmolzen oder erweicht werden und das geschmolzene Material C1 in Kontakt mit zumindest einem Teil des geschmolzenen Materials C2 gebracht wird, um die beiden Materialien zu verkleben.

11. Verfahren nach Anspruch 7, wobei das Material C1 und das Material C2 durch ein Verfahren zur direkten Haftung, das aus: Umspritzen, Warmpressen, Coextrusion, Thermoformen, Spritzgießen, Extrudieren, Blasformen und Mischungen davon ausgewählt ist, vorzugsweise durch Umspritzen eines Materials mit dem anderen, vorzugsweise durch Umspritzen eines TPE mit dem erfindungsgemäßen Copolymer, vorzugsweise durch Umspritzen eines TPU mit dem Copolymer, verbunden werden.

12. Verfahren nach einem der Ansprüche 7 bis 11, wobei die Verbindungstemperatur im Bereich von 220 bis 300 °C, vorzugsweise von 250 bis 290 °C, vorzugsweise von 270 bis 290 °C, liegt.

13. Verbundgegenstand, der mindestens zwei Polymermaterialien umfasst, die direkt aneinander haften, wobei es sich bei dem einen um ein Copolymer nach einem der Ansprüche 1 bis 6, beim anderen um thermoplastische Elastomere (TPE) handelt, die aus: einem identischen Copolymer mit Polyamid- (PA-)Blöcken und Polyether- (PE-)Blöcken (PEBA), dessen Biegemodul von demjenigen des Copolymers verschieden ist, PEBA mit einer Zusammensetzung, die von derjenigen des Copolymers verschieden ist, einem Copolyether-Block-Ester (COPE) und/oder einem Copolyether-Block-Urethan (TPU) ausgewählt sind.

14. Verwendung eines Artikels nach Anspruch 13 zur Herstellung eines Sportgeräts, eines Schuhelements, insbesondere eines Sportschuhs, einer Schuhsohle, insbesondere eines Stollens, eines Skielements, insbesondere eines Skischuhs oder einer Skischale, eines Medizinprodukts, in einem Treibriemen, als antistatisches Additiv, als atmungsaktiver Film, als Träger für aktive Moleküle, als farbgebendes Mittel, als Schweißmittel, als dekoratives Element und/oder als Polyamidadditiv.

## Claims

1. Use of a copolymer having polyamide PA blocks and polyether PE blocks (PEBA) in a process of direct adhesion between two thermoplastic elastomer (TPE) materials for increasing the peel strength between these materials, **characterized in that** the PEBA is a copolymer having polyamide PA blocks and polyether PE blocks, in which PA is of X.Y type: X, the number of carbons of the diamine, is within the range from 6 to 14, and Y, the number of carbons of the diacid, is within the range from 6 to 18.

2. Use according to Claim 1, in which X is chosen from 6 or 10 and Y is chosen from 10 or 12; preferably, PA X.Y is PA 6.10 or PA 6.12, preferably PA 6.10.

3. Use according to either one of Claims 1 and 2, in which PE is chosen from PTMG, PPG, PO3G and/or PEG and is preferably chosen from PTMG, PPG and/or PO3G.

4. Use according to any one of Claims 1 to 3, in which said copolymer comprises from 51% to 90% by weight, preferably from 60% to 90% by weight and preferably from 65% to 85% by weight of polyamide blocks and respectively from 49% to 10% by weight, preferably from 40% to 10% by weight and preferably from 35% to 15% by weight of polyether blocks, with respect to the total weight of copolymer.

5. Use according to any one of Claims 1 to 4, in which the number-average molecular weight (Mn) of the PA blocks is within the range from 500 to 10 000, preferably from 1000 to 10 000, preferably from 2000 to 9000, preferably from 2000 to 6000, preferably from 2000 to 3000 and preferably from 2500 to 3000.

6. Use according to any one of Claims 1 to 5, in which the number-average molecular weight (Mn) of the PE blocks is within the range from 400 to 1000, preferably from 500 to 1000, preferably from 600 to 700 and preferably from 600 to 650.

7. Process of direct adhesion of a copolymer material having polyamide PA blocks and polyether PE blocks (PEBA) C1 as defined in any one of Claims 1 to 6 with a copolymer material C2, C2 being of identical composition to and

having the same flexural modulus as C1, or being of identical composition to but having a different flexural modulus from C1, or a thermoplastic elastomer (TPE) material chosen from PEBAs of different composition from that of said copolymer C1, copolyether-block-esters (COPEs) and/or copolyether-block-urethanes (TPUs), **characterized in that** the assembling is carried out by a process comprising the heating of at least one of the two copolymer materials C1 and/or C2, so as to cause one material to adhere to the other.

**8.** Process according to Claim 7, in which the material C1 is melted or softened under heating and the molten material C1 is brought into contact with at least a portion of the material C2 of the series of the thermoplastic polyurethanes TPUs in order to cause the two materials to adhere.

**9.** Process according to Claim 7, in which the material C2 of the series of the thermoplastic polyurethanes TPUs is melted or softened under heating and the molten material C2 is brought into contact with at least a portion of the material C1 in order to cause the two materials to adhere.

**10.** Process according to Claim 7, in which the material C1 and the material C2 of the series of the TPUs are independently melted or softened under heating and the molten material C1 is brought into contact with at least a portion of the molten material C2 in order to cause the two materials to adhere.

**11.** Process according to Claim 7, in which the material C1 and the material C2 are assembled by a direct adhesion process chosen from: overmoulding, hot pressing, coextrusion, thermoforming, injection moulding, extrusion moulding, blow moulding and their mixtures, preferably by overmoulding one material over the other, preferably by overmoulding the copolymer according to the invention over a TPE and preferably by overmoulding the copolymer over a TPU.

**12.** Process according to any one of Claims 7 to 11, in which the assembling temperature is within the range from 220 to 300°C, preferably from 250 to 290°C and preferably from 270 to 290°C.

**13.** Composite article comprising at least two polymer materials which adhere directly to one another, one made of copolymer as defined according to any one of Claims 1 to 6 and the other made of thermoplastic elastomers (TPEs) chosen from identical copolymer having polyamide PA blocks and polyether PE blocks (PEBA) with a flexural modulus different from that of the copolymer, PEBA of composition different from that of said copolymer, copolyether-block-ester (COPE) and/or copolyether-block-urethane (TPU).

**14.** Use of an article according to Claim 13, for the manufacture of sports equipment, of a component of footwear, in particular of a sports shoe, shoe sole, in particular crampon, component of a ski, in particular of a ski boot or of a ski shell, of a medical device, in a transmission belt, as antistatic additive, as waterproof-breathable film, as support for active molecules, as colouring agent, as welding agent, as decorative element and/or as additive for polyamide.

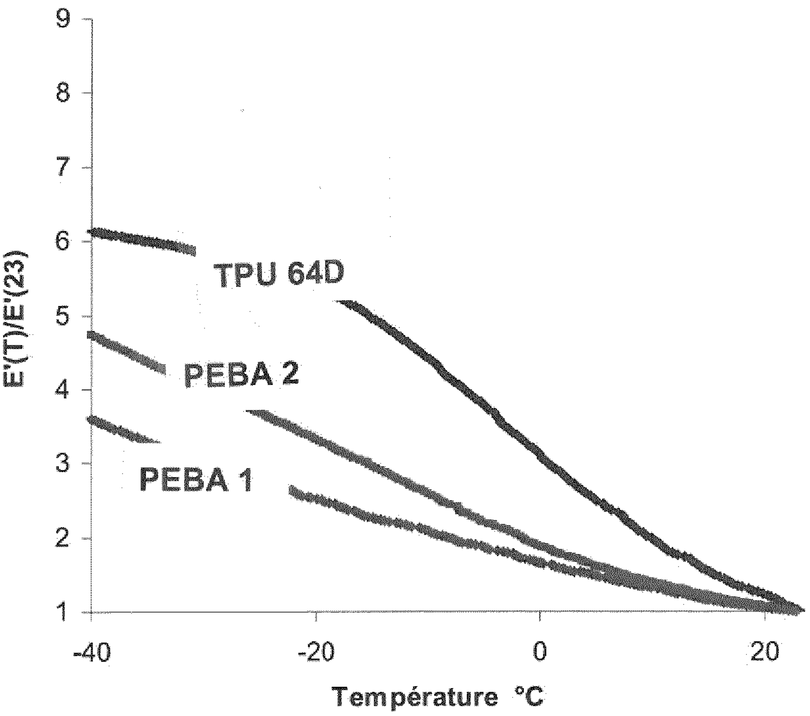


Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 197845 A
- EP 179700 A
- EP 0679119 A
- US 6590065 B
- EP 613919 A
- JP 2004346274 B
- JP 2004352794 B
- EP 1482011 A
- FR 2846332